**Europäisches Patentamt**

**European Patent Office**

**Office européen des brevets**

(19)

(11) Veröffentlichungsnummer: **0 027 581**
**B1**

(12) **EUROPÄISCHE PATENTSCHRIFT**

(45) Veröffentlichungstag der Patentschrift:
**02.05.85**

(21) Anmeldenummer: **80105973.4**

(22) Anmeldetag: **02.10.80**

(51) Int. Cl.⁴: **E 06 B 7/02, F 24 F 5/00**

(54) **Lüftungsanordnung.**

(30) Priorität: **22.10.79 AT 6849/79**

(43) Veröffentlichungstag der Anmeldung:
**29.04.81 Patentblatt 81/17**

(45) Bekanntmachung des Hinweises auf die Patenterteilung:
**02.05.85 Patentblatt 85/18**

(84) Benannte Vertragsstaaten:
**CH DE LI**

(56) Entgegenhaltungen:
**DE - A - 2 608 557**
**DE - A - 2 632 434**
**DE - A - 2 725 679**
**DE - B - 2 706 637**
**DE - U - 7 927 268**
**FR - A - 1 573 447**
**GB - A - 1 270 260**

(73) Patentinhaber: **Gilli, Paul Viktor Prof. Dipl.-Ing. Dr. techn, Obere Teichstrasse 21/i, A-8010 Graz (AT)**

(72) Erfinder: **Gilli, Paul Viktor Prof. Dipl.-Ing. Dr., Obere Teichstrasse 21/i, A-8010 Graz (AT)**
Erfinder: **Gilli, Paul Godfried, Dipl.-Ing. Dr., Grillparzerstrasse 32, A-8010 Graz (AT)**
Erfinder: **Gilli, Gerhard, Obere Teichstrasse 21/i, A-8010 Graz (AT)**

(74) Vertreter: **Skuhra, Udo, Dipl.-Ing., Reinhard, Skuhra, Weise Patentanwälte Leopoldstrasse 51, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Lüftungsanordnung für Fenster gemäss dem Oberbegriff des Patentanspruchs 1.

Eine Lüftungsanordnung gemäss dem Oberbegriff des Patentanspruchs 1 ist aus der DE-A-2 608 557 bekannt und weist zwei durch drei Scheiben gebildete Zwischenräume auf. Durch den zum Rauminneren gewandten Zwischenraum wird Abluft vom Rauminneren nach aussen geleitet, während durch den vom Raum abgewandten Zwischenraum Frischluft von aussen, gegebenenfalls über ein Gebläse ins Rauminnere geführt wird. Durch die parallele Anordnung der Frischluft- und Abluftströmung, wobei zudem der die Abluft führende Zwischenraum in der Lüftungsanordnung sich raumseitig befindet, lässt sich keine wesentliche Verbesserung der Transmissionsverluste eines Fensters als auch keine Verbesserung der gesamten Wärmeverluste erreichen.

In der FR-A-1 573 447, der DE-A-2 725 679 oder dem DE-U-7 927 268 sind Lüftungsanordnungen beschrieben, die zwei Scheiben und eine durchscheinende Trennwand oder drei Scheiben aufweisen, wobei die Trennwand oder die Scheiben teilweise verkürzt sind, um Führungskanäle für die Luftströmung festzulegen. Beim Einsatz verkürzter Trennwände oder Scheiben ergeben sich ersichtlicherweise Schwierigkeiten hinsichtlich deren Halterung und Stabilität.

Der Erfindung liegt demgegenüber die Aufgabe zugrunde, eine Lüftungsanordnung der eingangs genannten Art so weiterzubilden, dass der Transmissionsverlust der Fenster und der gesamte Wärmeverlust auf einen Bruchteil reduziert werden können.

Diese Aufgabe wird erfindungsgemäss durch die Merkmale des kennzeichnenden Teils des Patentanspruchs 1 gelöst.

Weitere Ausgestaltungen ergeben sich aus den Unteransprüchen.

Bei der Lüftungsanordnung ist ein Überbrückungskanal oder Beipass für die mittlere Scheibe vorgesehen, wodurch die Zuführung von Frischluft von aussen über den einen Zwischenraum, anschliessend durch den Überbrückungskanal und schliesslich durch den zweiten Zwischenraum ins Rauminnere erfolgt. Da die Frischluft zuerst durch den äusseren Zwischenraum und erst dann über den inneren Zwischenraum zum Rauminneren geführt wird, werden Transmissionsverluste aufgefangen. Aus dem Raum abgestrahlte Wärme wird gleichzeitig von der Frischluft aufgenommen und wieder ins Rauminnere zurückgeleitet.

Nach einer bevorzugten Ausführungsform ist vorgesehen, mehrere, durch zwei Scheiben gebildete Verglasungselemente durch die äussere Scheibe abzudecken, so dass die Frischluft über den äusseren Zwischenraum zugeführt und dann durch die innenliegenden Zwischenräume der einzelnen Verglasungselemente in das Rauminnere geführt wird.

Im folgenden werden bevorzugte Ausführungsformen der erfindungsgemässen Lüftungsanordnung anhand der Zeichnung zur Erläuterung weiterer Merkmale beschrieben. Es zeigen:

Fig. 1 eine schematische Schnittdarstellung einer ersten Ausführungsform der erfindungsgemässen Lüftungsanordnung,

Fig. 2 eine Fig. 1 entsprechende Ansicht einer Lüftungsanordnung, bei der die Scheiben jeweils in einen Holzrahmen eingesetzt sind,

Fig. 3 eine Ansicht eines Fensters der Lüftungsanordnung entsprechend Fig. 2 oder 3,

Fig. 4 eine weitere Ausführungsform einer Lüftungsanordnung, bei welcher mehrere Fenster an der Aussenseite durch eine äussere Verglasung abgedeckt sind.

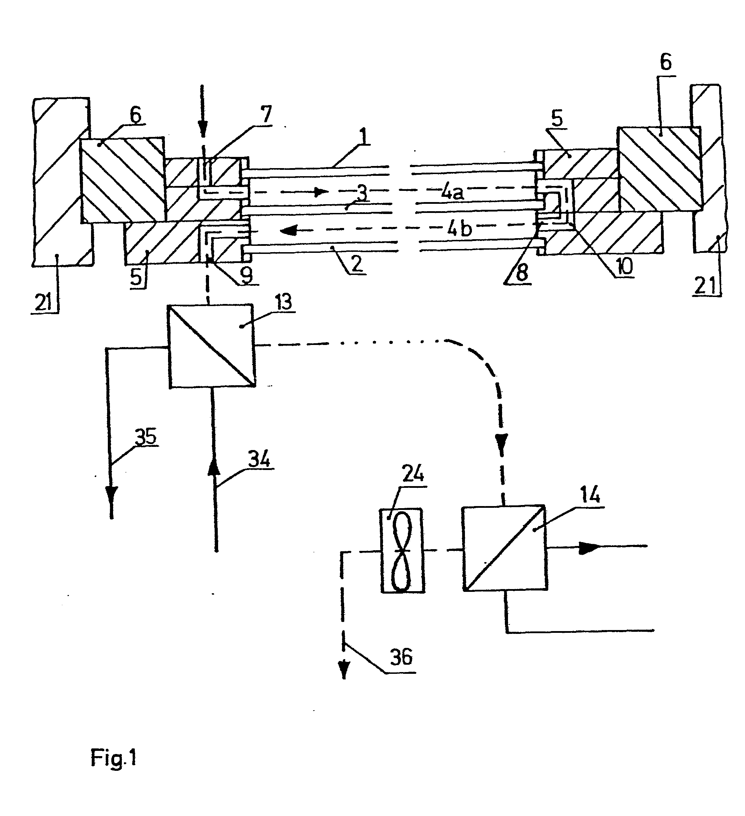

Im folgenden wird auf die Lüftungsanordnung nach Fig. 1 Bezug genommen. Bei dieser Lüftungsanordnung ist ein Fenster mit einer äusseren Scheibe 1, einer inneren, d.h. zur Raumseite gewandten Scheibe 2 und einer zwischen der äusseren und der inneren Scheibe liegenden mittleren Scheibe 3 vorgesehen. Die auf diese allgemein bekannte Weise angeordneten Scheiben 1, 2, 3 legen zwischen sich zwei Zwischenräume 4a und 4b fest, wobei ein äusserer Zwischenraum 4a und ein innerer Zwischenraum 4b definiert wird. Der Rahmen des Fensters ist mit 5 bezeichnet, während der Fensterstock mit 6 angegeben ist. Es ist ersichtlich, dass – obgleich nur ein einziges Fenster bei der Lüftungsanordnung nach Fig. 1 dargestellt ist – die Lüftungsanordnung grundsätzlich mehrere derartige Fenstereinheiten umfassen kann. Jedes Fenster ist in eine Wandkonstruktion 21 eingelassen und weist eine Eintrittsöffnung 7 für Aussenluft (Frischluft) auf, die entweder im Bereich des Fensterrahmens 5 oder des Fensterstocks 6 ausgebildet sein kann, wie im folgenden noch beschrieben wird. Ferner enthält das Fenster eine Umleitungsöffnung 8, die auch als Verbindungskanal bezeichnet werden kann und eine Strömung von dem aussenliegenden Zwischenraum 4a zum innenliegenden Zwischenraum 4b unter Umgehung der mittleren Scheibe 3 ermöglicht. Auf der zum Rauminneren gewandten Seite des Fensters ist entsprechend eine Austrittsöffnung 9 für die Aussenluft vorzusehen, wobei diese Austrittsöffnung 9 in gleicher Weise entweder im Fensterrahmen 5, wie dargestellt, oder im Fensterstock 6 ausgebildet sein kann.

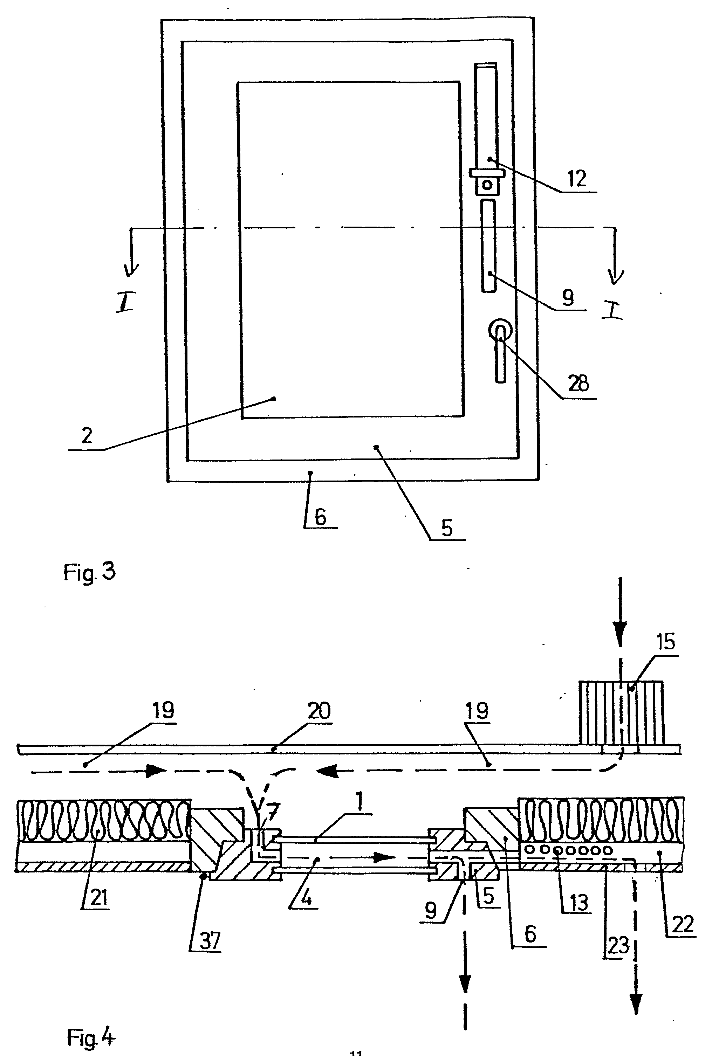

Die Fig. 1 zeigt eine Schnittansicht etwa in Richtung der Linie I–I in Fig. 4, d.h. eine Ansicht entsprechend einem Horizontalschnitt durch ein Fenster. Die Eintrittsöffnung 7 führt hierbei von der Aussenseite durch den Rahmen 5 zum äusseren Zwischenraum 4a und die Austrittsöffnung 9 vom inneren Zwischenraum 4b zum Rauminneren. Die Öffnungen 7, 9 und der Verbindungskanal 8 sind dabei in den seitlichen Teilen des Fensters bzw. im seitlichen Rahmenteil ausgebildet, wobei nach der dargestellten Ausführungsform die Öffnungen 7, 9 auf der linken Seite und der Verbindungskanal 8 auf der rechten Seite des Rahmens vorgesehen ist.

Die Öffnungen 7 und 9 können jeweils auch mehrfach über die Höhe des Rahmens verteilt angeordnet sein.

Die Luftströmung durch den äusseren Zwischenraum 4a erfolgt dabei über eine Vertikalebene von links nach rechts und die Luftströmung durch den Zwischenraum 4b in einer Vertikalebene, jedoch entgegengesetzt zur Strömungsrichtung im Zwischenraum 4a.

Nach Fig. 1 kann die aus der Austrittsöffnung 9 abgeleitete Aussenluft über eine Heizeinrichtung 13 in das Rauminnere geführt werden, dabei die Heizeinrichtung einen Heizungsvorlauf 34 und einen Heizungsrücklauf 35 aufweist. Die Abluft aus dem RaumInneren wird gemäss der Erfindung nicht über das Fenster nach aussen geleitet, sondern über eine mit 14 bezeichnete Einrichtung zur Wärmerückgewinnung, beispielsweise über den Verdampfer einer Wärmepumpe. Ein Gebläse 24 dient als Ventilationseinheit zur Erzeugung der in Fig. 1 grundsätzlich dargestellten Luftströmung und saugt die dem Verdampfer 14 der Wärmepumpe zugeführte Abluft ins Freie ab, was durch das Bezugszeichen 36 angedeutet ist.

Mit der in Fig. 1 dargestellten Lüftungsanordnung wird damit erreicht, dass die äussere Scheibe 1 sich auf einer Temperatur befindet, die nahe der Aussentemperatur liegt, infolgedessen die Transmissionswärmeverluste sehr stark verringert werden.

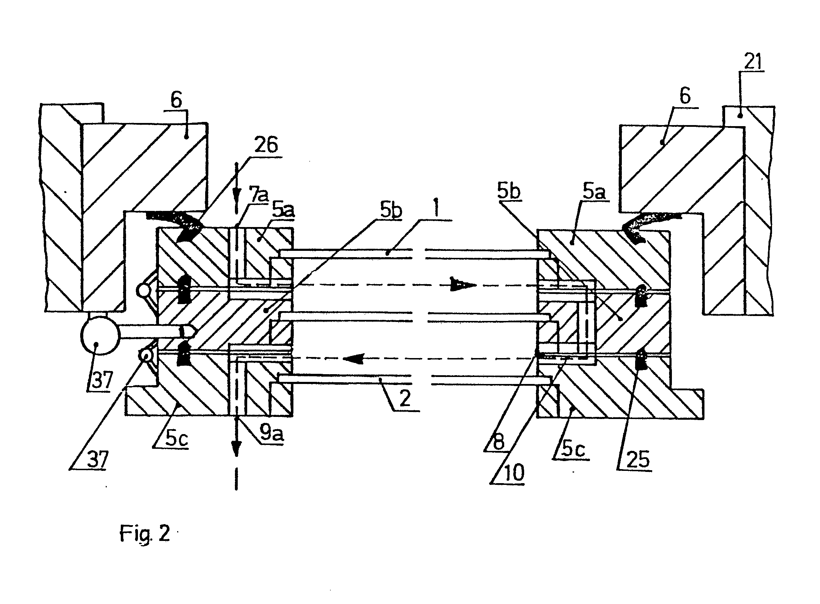

Während bei der Ausführungsform nach Fig. 1 ein stationäres Fenster in die Wandkonstruktion 21 eingesetzt ist, zeigt Fig. 2 eine Lüftungsanordnung mit einem öffnungsfähigen Fenster, wobei der Fensterrahmen 5 aus Holz besteht. Um ein Reinigen der Scheiben 1, 2, 3 zu ermöglichen, ist dieses Fenster als Verbundfenster ausgeführt. Das Fenster weist daher ein äusseres Rahmenteil 5a, ein mittleres Rahmenteil 5b und ein inneres Rahmenteil 5c auf, zwischen denen jeweils Dichtungen 25 angeordnet sind und damit die in Fig. 2 dargestellte Luftströmung entsprechend den gestrichelten Pfeilen sicherstellen und das Ansaugen von Abluft über andere Wege verhindern. Zwischen dem Fensterrahmen 5 und dem Fensterstock 6 sind zusätzliche Dichtungslippen 26 vorgesehen. Die Scharniere des Fensters, über welche der Fensterrahmen 5 am Fensterstock 6 befestigt ist, sind durch das Bezugszeichen 37 angedeutet.

Der Eintritt und der Austritt von Aussenluft erfolgt bei dem Fenster nach Fig. 2 über Ein- und Austrittsöffnungen 7a, 9a, die im Fensterrahmen 5 in entsprechender Weise, wie unter Bezugnahme auf Fig. 1 beschrieben ist, ausgebildet sind. Die Eintrittsöffnung 7a führt über das äussere Rahmenteil 5a und einen Teil des inneren Rahmenteils 5c in den äusseren Zwischenraum 4a. Vom äusseren Zwischenraum 4a führt der Verbindungskanal 8 über das äussere Rahmenteil 5a, das mittlere Rahmenteil 5b und das innere Rahmenteil 5c in den Zwischenraum 4b. Vom Zwischenraum 4b wird die Luft über die Austrittsöffnung 9a durch das mittlere Rahmenteil 5b und das innere Rahmenteil 5c in das Rauminnere geleitet.

Der Strömungsverlauf kann ersichtlicherweise auch derart gestaltet werden, dass die Eintrittsöffnung 7a ausschliesslich durch das äussere Rahmenteil zum Zwischenraum 4a führt, während der Verbindungskanal 8 zwischen dem äusseren und inneren Zwischenraum 4a, 4b ausschliesslich im mittleren Rahmenteil 5b vorgesehen sein kann. Entsprechend kann die Austrittsöffnung 9a ausschliesslich durch das innere Rahmenteil 5c führen.

In Fig. 2 ist eine Fig. 1 entsprechende Horizontalschnittansicht dargestellt.

In Fig. 3 ist ein Aufriss der im Grundrissschnitt nach Fig. 2 dargestellten Fenster wiedergegeben; die Ansicht des Fensters entspricht der Innenansicht. Das Fenster weist in üblicher Weise einen Griff 28 zum Öffnen und Schliessen des Fensters auf. Zur Einstellung der durch die einzelnen Fenster geführten Aussenluftmenge werden vorzugsweise Drosseleinrichtungen 12 vorgesehen. Jede Drosseleinrichtung 12 kann beispielsweise in Form eines Langlochschiebers ausgebildet sein. Fig. 3 zeigt ferner, dass die Austrittsöffnung 9 etwa in der Mitte der Fensterhöhe vorgesehen sein kann. Es können natürlich über diese verteilt auch mehrere Austrittsöffnungen 9 vorgesehen werden.

Im folgenden wird auf Fig. 4 Bezug genommen, welche eine weitere Ausführungsform der Lüftungsanordnung veranschaulicht. Bei dieser Lüftungsanordnung ist eine gemeinsame Aussenluftzufuhr und eine gemeinsame Luftabfuhr für mehrere Fenster vorgesehen. Den Fenstern ist nach Fig. 4 (hierbei ist nur ein einziges Fenster angedeutet) eine Glas-Abdeckung 20 vorgesetzt, die zwischen sich und den Fenstern bzw. der Wandkonstruktion 21 einen Aussenkanal 15 festlegt. Die Aussenluft strömt, vorzugsweise über ein Filter 15, in den Aussenkanal 19, der – soweit keine Wandkonstruktion der Abdeckung 20 gegenüberliegt – durch die äussere Scheibe 1 jedes Fensters einerseits und die Abdeckung 20 anderseits gebildet ist. Die Glasabdeckung 20 wirkt zusammen mit dem Kanal 19 als Sonnenkollektor, wobei die Luftströmung durch den Kanal 19 das Wärmeübertragungsmedium darstellt. Die durch den Kanal 19 geführte Aussenluft wird über eine Eintrittsöffnung 7 eines Fensterelements in den Zwischenraum 4 der einzelnen Fenster geführt. Anschliessend wird die Luft aus dem Zwischenraum 4 über Austrittsöffnungen 9 im Fensterrahmen 5 oder im Fensterstock 6 in das Rauminnere geleitet. Ausserdem kann die aus dem Zwischenraum 4 weggeführte Aussenluft wieder zusätzlich oder ausschliesslich durch einen Kanal 22 passieren, der in der Wandkonstruktion 21 vorgesehen ist und der die Aussenluft in gewünschter Weise, gegebenenfalls nach Durchgang durch eine Heizeinrichtung 13, in das Rauminnere verteilt. Der Kanal 22 wird einerseits von der Wandkonstruktion 21 und anderseits von einer inneren Abdeckung 23 festgelegt. Es sei darauf hingewiesen, dass im Gegensatz zu der Darstellung nach Fig. 5 mehrere Fensterelemente vorgesehen werden können, zwischen welchen jeweils eine Wandkonstruktion 21 mit dem Kanal 22 und der Abdeckung 23 liegt. Die Abdeckung 20 kann beispielsweise eine Glasfassade oder ähnliches sein.

Nach bevorzugten Ausführungsformen der Erfindung kann die Aussenluft über die Zwischenräume des Fensters in den Raum, gegebenenfalls unter Zwischenschaltung einer Heizeinrichtung, eingeblasen werden bzw. angesaugt werden, während die Abluft über einen Kanal ins Freie geleitet wird, der getrennt zu den Fenstern bzw. zu den Zwischenräumen in den Fenstern vorgesehen ist und vorzugsweise eine Anlage zur Wärmerückgewinnung, wie z.B. Wärmetauscher einer Wärmepumpenanlage, enthält.

## Patentansprüche

1. Lüftungsanordnung für Fenster mit einer aus drei Scheiben (1, 2, 3, 20) bestehenden Verglasung, bei dem die beiden durch die Scheiben festgelegten Zwischenräume (4a, 4b, 4, 19) von Luft durchströmt sind, wobei die Strömungsrichtung in den benachbarten Zwischenräumen zueinander entgegengesetzt ist, mit im Fensterrahmen bzw. Fensterstock (5, 6) ausgebildeten Kanälen als Lufteintritts- und Luftaustrittsöffnungen (7, 9), und mit einem Gebläse zur Erzeugung einer Luftströmung, dadurch gekennzeichnet, dass in einem seitlichen, vertikalen Rahmenteil des Fensterrahmens bzw. Fensterstockes (5 bzw. 6) ein Kanal (8, 10) vorgesehen ist, der als Umlenkkanal zur mittleren Scheibe (3) den äusseren Zwischenraum (4a) mit dem inneren Zwischenraum (4b) verbindet und durch den bei Durchströmung des Fensters mit Aussenluft die Luftströmung vom äusseren Zwischenraum (4a) durch den inneren Zwischenraum (4b) ins Rauminnere geführt ist und dass die Lufteintritts- und Luftaustrittsöffnungen (7, 9) an der dem Umlenkkanal gegenüberliegenden Seite des Fensterrahmens bzw. Fensterstockes angeordnet sind.

2. Lüftungsanordnung nach Anspruch 1, dadurch gekennzeichnet, dass die aussenliegende Scheibe (20) als Abdeckung für mehrere Fenster (1, 4) vorgesehen ist, dass die Luft von aussen durch den zwischen der aussenliegenden Scheibe (20) und die Fenster (1, 4) festgelegten Zwischenraum (19) in mehrere, jeweils durch mehrere Fenster (1, 4) bestimmt innere Zwischenräume (4) in das Innere des Raumes geführt wird.

3. Lüftungsanordnung nach Anspruch 1 oder 2, dadurch gekennzeichnet, dass zwischen dem äussersten Zwischenraum (4a) und dem innersten Zwischenraum (4b) eine Isolierglasscheibe mit einer stagnierenden Luft- oder Gasschicht (6) angeordnet ist.

## Claims

1. Ventilation arrangement for windows with glazing consisting of three panes (1, 2, 3, 20), wherein air flows through the two intermediate spaces (4a, 4b, 4, 19) defined by the panes, the direction of flow in the adjacent intermediate spaces being in opposition to one another, with passages constructed in the window frame or window jamb (5, 6) to serve as air inlet and air outlet apertures (7, 9) and with a blower for generating an air flow, characterised in that in a lateral vertical frame part of the window frame or window jamb (5, 6) there is a passage (8, 10) which, as a deflecting channel to the middle pane (3) connects the outer intermediate space (4a) to the inner intermediate space (4b) and which, when outside air flows through the window, conducts the air flow from the outer intermediate space (4a) through the inner intermediate space (4b) into the interior of the room, and in that the air inlet and air outlet apertures (7, 9) are disposed on that side of the window frame or window jamb which is opposite the deflecting channel.

2. Ventilation arrangement according to Claim 1, characterised in that the outer pane (20) is provided as a covering for a plurality of windows (1, 4), and in that the air is conducted from the outside into the interior of the room through the intermediate space (19) defined between the outer pane (20) and the windows (1, 4) into a plurality of inner intermediate spaces (4) defined in each case by a plurality of windows (1, 4).

3. Ventilation arrangement according to Claim 1 or 2, characterised in that between the outermost intermediate space (4a) and the innermost intermediate space (4b) there is a pane of insulating glass with a layer (16) of still air or gas.

## Revendications

1. Dispositif d'aération pour une fenêtre comprenant un vitrage constitué par trois vitres (1, 2, 3, 20), dans laquelle deux espaces intermédiaires (4a, 4b, 4, 19) constitués par les vitres sont traversés par le courant de l'air, la direction du courant dans les espaces intermédiaires voisins étant en sens contraire, comprenant en tant qu'ouvertures d'entrée et de sortie d'air (7, 9) des canalisations constituées dans le cadre (5) ou dans l'encadrement (6) de la fenêtre, ainsi qu'une soufflante pour créer un courant d'air, caractérisé en ce qu'il est prévu dans une partie verticale et latérale du cadre ou de l'encadrement (5 ou 6) de la fenêtre une canalisation (8, 10) qui relie en tant que canalisation de dérivation par rapport à la vitre centrale (3) l'espace intermédiaire externe (4a) à l'espace intermédiaire interne (4b) et par laquelle, quand il y a traversée de la fenêtre par de l'air de l'extérieur, le courant de l'air est guidé depuis l'espace intermédiaire externe (4a) et en passant par l'espace intermédiaire interne (4b) vers l'intérieur de la pièce, et en ce que les ouvertures d'entrée et de sortie d'air (7, 9) sont disposées sur le côté du cadre ou de l'encadrement de la fenêtre qui est à l'opposé de la canalisation de dérivation.

2. Dispositif d'aération selon la revendication 1, caractérisé en ce que la vitre (20) située à l'extérieur est prévue en tant qu'élément de recouvrement pour plusieurs fenêtres (1, 4), de manière que l'air provenant de l'extérieur soit guidé vers l'intérieur de la pièce en passant par l'espace intermédiaire (19) constitué entre la vitre externe (20) et la fenêtre (1, 4) en passant par plusieurs espaces intermédiaires internes (4) déterminés respectivement par plusieurs fenêtres (1, 4).

3. Dispositif d'aération selon la revendication 1 ou 2, caractérisé en ce qu'une vitre isolante comprenant une couche stagnante (16) d'air ou de gaz est disposée entre l'espace intermédiaire externe (4a) et l'espace intermédiaire interne (4b).

Fig.1

Fig. 2

0 027 581

Fig. 3

Fig. 4

11